# EUROPEAN PATENT SPECIFICATION

(11) **EP 3 933 724 B1**
(45) Date of publication and mention of the grant of the patent: **09.04.2025**
(21) Application number: 21182675.5
(22) Date of filing: 30.06.2021
(51) Int. Cl.: G06Q 10/04, G06Q 10/063, G06Q 50/06, H02J 3/14

(54) **METHOD AND ENERGY MANAGEMENT SYSTEM FOR OPTIMAL USE OF SOLAR ENERGY**
VERFAHREN UND ENERGIEVERWALTUNGSSYSTEM ZUR OPTIMALEN NUTZUNG VON SONNENENERGIE
PROCÉDÉ ET SYSTÈME DE GESTION D'ÉNERGIE POUR UNE UTILISATION OPTIMALE DE L'ÉNERGIE SOLAIRE

(30) Priority: 30.06.2020 BE 202005489
(43) Date of publication of application: 05.01.2022
(73) Proprietor: Niko NV, 9100 Sint-Niklaas (BE)
(72) Inventor: van Remortel, Bart, 4576 CW Koewacht (NL)
(74) Representative: Calysta NV

(56) References cited:
- ANONYMOUS E: "Betriebsanleitung SUNNY HOME MANAGER 2.0 HM-20-BE-de-11 | Version 1", 26 June 2017 (2017-06-26), pages 1 - 178, XP055779217, Retrieved from the Internet <URL:https://www.merkasol.com/WebRoot/StoreLES/Shops/62387086/5A1E/FE1D/1CD1/77BD/1142/0A0C/6D09/ABA6/manual_Central_de_Control_Sunny_Home_Manager_ger.pdf> [retrieved on 20210224]
- ANONYMOUS: "TechnischeInformation SMA SMART HOME Verbrauchersteuerung über KANN-Zeitfenster Beispiel: Teichpumpe SSH_KANN-Zeitfenster-TI-de-10 | Version 1.0 DEUTSCH", 15 November 2013 (2013-11-15), pages 1 - 20, XP055779226, Retrieved from the Internet <URL:https://www.sma-sunny.com/wp-content/uploads/2015/06/SSH_KANN-Zeitfenster-TI-de-10.pdf> [retrieved on 20210224]
- ANONYMOUS: "TechnischeInformation SMA SMART HOME Verbrauchersteuerung über MUSS-Zeitfenster Beispiel: Waschmaschine SSH_MUSS-Zeitfenster-TI-de-10 | Version 1.0 DEUTSCH", 31 December 2016 (2016-12-31), pages 1 - 181, XP055779024, Retrieved from the Internet <URL:https://docplayer.org/399270-Technische-information-sma-smart-home-verbrauchersteuerung-ueber-muss-zeitfenster-beispiel-waschmaschine.html> [retrieved on 20210223]

## Description

### Technical field of the invention

The present invention relates to the use of solar energy in a building. More particularly, it relates to a method and an energy management system that allows to make optimal use of solar energy at the moment that it is generated.

### Background of the invention

Nowadays, people more and more tend to want to keep an eye on their energy. Therefore, energy management and energy management systems are currently very much wanted.

EP 2 946 568 describes an energy management system for monitoring electronic and/or electric appliances by measuring or monitoring power parameters over a main electricity cable, applying a signature detection algorithm on the power parameters and transferring a data packet comprising the output of the signature detection algorithm for efficiently monitoring energy consumption follow-up in real-time from a remote location.

Lots of households make use of solar energy. When a user has solar panels on his building, solar energy is generated as soon as the sun is shining on the panels. However, any excess on solar energy which is not used in the building at the moment it is generated, is sent to the electricity grid.

EP 2 943 842 describes an energy management system handling constant loads, which are usually not turned off completely, differently from sporadic loads, which only run for a limited timer period. Constant loads such as heating or ventilation can be scheduled based on information from an external service provider without or with limited input from a user. The sporadic loads such as a washing machine or a dish washer on the other hand can be scheduled more freely based on information inputted by a user, possibly in combination with information from the external service provider.

Whether a load should be categorized as a constant or sporadic load may be predefined in the energy management gateway prior to installation, or it may be defined upon installation by a user or a technician. It may also be possible for a user or technician to indicate whether a load should be categorized as a constant or sporadic load when adding a new load to be controlled by the energy management gateway via the user interface.

According to some embodiments, the constant load(s) and/or sporadic load(s) are scheduled based on obtained information about local energy production, such as solar or wind power.

The system of EP 2 943 842 requires a lot of programming and knowledge and linking with external information, either from an external source or inputted via by a user. It may take a lot of time to first divide the appliances in constant loads and sporadic loads, and then link to the external information to decide on the scheduling.

Documents "Betriebsanleitung SUNNY HOME MANAGER 2.0 HM-20-BE-de-11", "TechnischeInformation SMA SMART HOME Verbrauchersteuerung über KANN-Zeitfenster Beispeil: Teichpumpe SSH_KANN-Zeirfenster-TI-de-10 | Version 1.0 DEUTSCH" and "TechnischeInformation SMA SMART HOME Verbrauchersteuerung über MUSS-Zeitfenster Beispiel: Waschmaschine SSH_MUSS-Zeitfenster-TI-de-10 | Version 1.0 DEUTSCH" all relate to the Sunny Home Manager of SMA. The Sunny Home manager provides a method for optimal use of solar energy in a building. The method comprises measuring the amount of local solar energy generation by means of a digital meter and monitoring energy consumption in the building by the digital meter. Solar energy usage is optimized by only switching on energy consumers when at least a minimum of solar energy generation is expected. Based on historical data or on the weather forecast, it is determined whether a particular solar energy generation can be expected. Expectations can be based on weather forecast and/or historical data.

However, expectations can go wrong when, for example, the weather forecast differs from the actual weather, and there is not enough solar energy generated after all. In that case energy consumers are switched on when there might be not enough solar energy available.

### Summary of the invention

It is an object of embodiments of the present invention to provide a method and a management system that allows to make optimal use of solar energy at the time that it is generated.

The above objective is accomplished by a method and a system according to embodiments of the present invention.

The present invention provides a method for optimal use of solar energy in a building. The method comprises measuring the amount of local solar energy generation, monitoring energy consumption in the building, and monitoring the difference between the energy consumption and the generated solar energy by using a digital meter installed by the Distribution System Operator, resulting in the available energy level. The method furthermore comprises, when the available energy level is below a predetermined threshold for at least a predetermined time duration, sending a signal to a gateway for activating a first electric or electronic appliance.

An advantage of a method according to embodiments of the invention is that solar energy is used when it is generated, which prevents too much solar energy being fed into the electricity grid. Users can, in that way, significantly save on the energy costs they have to pay to electricity providers. A user can him- or herself determine which electric or electronic appliances have to be activated when the available energy level is high enough, or in other words, when more solar energy is generated than energy is used at that time.

A method according to embodiments of the invention makes use of a predetermined time duration, i.e. of sort of a waiting time to protect the devices from turning on and/or off too often. Without that logic appliances can be damaged of flipping on and off too many times in a short period of time.

Sending a signal to the gateway may, according to embodiments of the invention, be done by sending a signal from user ports of a digital meter installed by the Distribution system Operator, which monitors the energy usage and generated solar energy, to a P1 port or user port of the gateway. This makes installation of the system very easy, just plug & play without the need to install 230 volt wires to make it work.

According to embodiments of the invention, the method may further comprise:
a) after activating the first electric or electronic appliance, and when the available energy level is still below the predetermined threshold for at least a further predetermined time duration, sending a signal to a gateway for activating a further electric or electronic appliance, and
b) as long as the available energy level is below the predetermined threshold for a further predetermined time, repeating step a).

According to embodiments of the invention, whenever the available energy level is no longer below the predetermined threshold, the method may further comprise sending a signal to the gateway for turning off or deactivate at least one of the first or further electric or electronic appliances. Sending a signal for deactivating at least one of the first or further electric or electronic appliances may again be done by sending a signal from user ports of the digital meter to a P1 port of the gateway, upon which a signal is sent from the gateway to a socket, plug, relay or API connection to which the appliance is connected. According to embodiments of the invention, the appliance that was last activated may be first deactivated. However, this is not necessarily so, the sequence of appliances to be deactivated can be set by a user during configuration. To avoid an electric or electronic appliance to be stopped before the end of a program cycle, according to embodiments of the invention, the user may be able to set a minimal duration the appliance should, when activated at the time a signal is received for deactivating that appliance, continue to be activated for finishing the started program cycle. According to some embodiments, the method may further comprise keeping at least one of the first or further electric or electronic appliances turned on for a predetermined time period before turning off, so that any program still running can be properly finished.

According to particular embodiments, activating a first electric or electronic device may comprise sending a signal from the gateway to an electrical plug into which the electric or electronic appliance is plugged in, after which the plug switches the electric or electronic appliance on.

The method may, according to specific embodiments, furthermore comprises, before activating the first electric or electronic appliance or the further electric or electronic appliance:
- checking the weather forecast, and
- not sending a signal for activating the first electric or electronic appliance or the further electric or electronic appliance if the weather forecast indicates that solar energy generation will become lower or zero.

The present invention furthermore relates to an energy management system for controlling energy usage of at least one electric or electronic appliance in a building. The energy management system comprises a gateway for controlling the at least one electric or electronic appliance, and a digital meter for measuring local solar energy generation and for monitoring the energy consumption in the building, the digital meter being adapted for determining and monitoring the difference between the energy consumption and the generated solar energy, resulting in the available energy level. The digital meter is further adapted for sending a signal to the gateway for activating a first electric or electronic appliance when the available energy level is below a predetermined threshold for at least a predetermined time duration, the predetermined threshold and the predetermined time duration being programmed in the gateway.

Configuration of the energy management system is very easy and can be configured via a mobile phone.

According to embodiments of the invention, user ports of the digital meter may be connected to the gateway via the P1 user port with a RJ12 cable. This makes installation of the system very easy, just plug & play without the need to install 230 volt wires to make it work.

The energy management system may, according to specific embodiments of the invention, further comprise at least one smart plug for switching the at least one electric or electronic appliance on or off upon receiving a signal from the gateway.

According to embodiments of the invention, the programming software in the gateway may be further adapted for:
a) after activating the first electric or electronic appliance, and when the available energy level (EA) is still below the predetermined threshold for at least a further predetermined time duration, sending a signal to a further electric or electronic appliance for activating the further electric or electronic appliance, and for
b) as long as the available energy level is below the predetermined threshold for a further predetermined time, repeating step a).

According to further embodiments of the invention, the programming software in the gateway may be further adapted to, whenever the available energy level is no longer below the predetermined threshold, send a signal to the gateway for turning off at least one of the first or further electric or electronic appliances.

According to embodiments of the invention, the digital meter and the gateway may further be adapted to keep at least one of the first or further electric or electronic appliances turned on for a predetermined time period before turning off, so that any program still running can be properly finished.

According to specific embodiments, the digital meter may further be adapted to check the weather forecast, and to not send a signal to the gateway for activating the first electric or electronic appliance or the further electric or electronic appliance if the weather forecast indicates that solar energy generation will become lower or zero.

### Brief description of the drawings

It has to be noted that same reference signs in the different figures refer to same, similar or analogous elements.
Fig. 1 illustrates a graph showing the available energy level over time for an energy management system according to embodiments of the invention.
Fig. 2 illustrates a scheme for optimal use of solar energy according to embodiments of the invention.
Fig. 3 illustrates a graph showing the available energy level over time for an energy management system according to embodiments of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

The present invention provides a method for optimal use of solar energy in a building. The method comprises measuring the amount of local solar energy generation, monitoring energy consumption in the building, and monitoring the difference between the energy consumption and the generated solar energy, resulting in the available energy level. The method furthermore comprises, when the available energy level is below a predetermined threshold for at least a predetermined time duration, sending a signal to a gateway for activating a first electric or electronic appliance.

An advantage of a method according to embodiments of the invention is that solar energy is used when it is generated, which prevents too much solar energy being fed into the electricity grid. Users can, in that way, significantly save on the energy costs they have to pay to electricity providers. A user can him- or herself determine which electric or electronic appliances have to be activated when the available energy level is high enough, or in other words, when more solar energy is generated than energy is used at that time.

A method according to embodiments of the invention makes us of a predetermined time duration, i.e. of sort of a waiting time to protect the devices from turning on and/or off too often. Without that logic appliances can be damaged of flipping on and off too many times in a short period of time.

The present invention will hereinafter be described by means of different embodiments. It has to be understood that these embodiments are only for the ease of understanding the invention and are not intended to limit the invention in any way.

An energy management system according to embodiments of the invention comprises a gateway for controlling at least one electric or electronic appliance. The gateway is located at a central location in the building. The energy management system furthermore comprises a digital meter. When a user has solar panels on his building, solar energy is generated as soon as the sun is shining on the panels. At the same time, within the building, energy is used from household appliances, heating or cooling, .... The digital meter measures the local solar energy generation over time. At the same time, the digital meter is monitoring the energy consumption in the building over time. According to embodiments of the invention, the digital meter is adapted to determine and monitor the difference between the energy consumption and the generated solar energy. Subtracting the generated solar energy from the energy consumption results in the available energy level E_{A} at a particular moment in time.

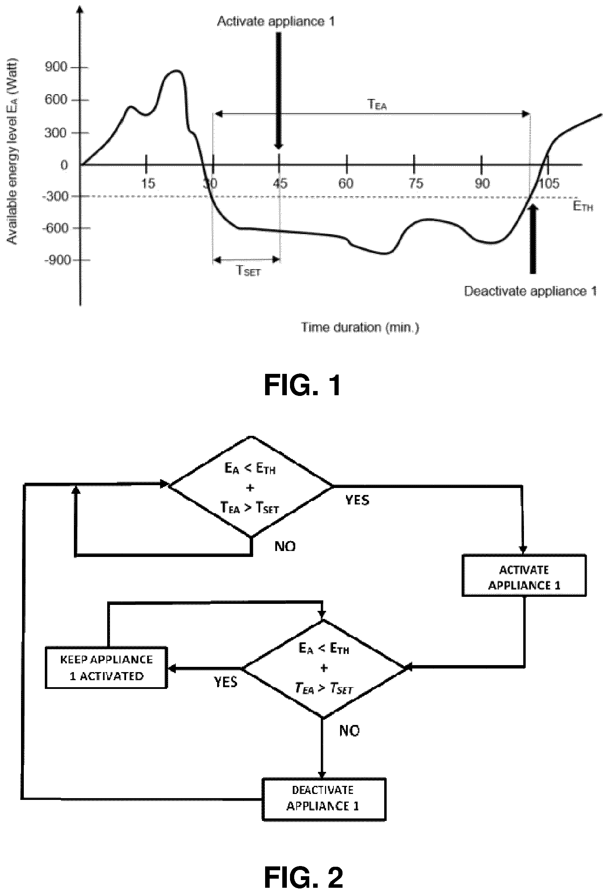

Fig. 1 shows an example of the available energy level E_{A} over time. As long as the available energy level E_{A} is higher than zero, more energy is used than there is solar energy generated by the solar panels. When the solar energy generated by the solar panels becomes, at a certain moment in time, higher than the energy consumed at that moment, the available energy level becomes lower than zero. From that moment on, the generated solar energy that is not consumed at that moment, disappears to the electricity grid. Although some digital meters compensate for the solar energy going to the electricity grid, it would still be better to use the solar energy at the moment that it is generated.

Therefore, according to the invention, when enough excess solar energy is available, or in other words, when the available energy level E_{A} is lower than a predetermined threshold E_{TH} for a predetermined time duration T_{SET}, a signal will be sent from the digital meter to the gateway indicating that a first electric or electronic appliance can be activated (see Fig. 2).

In the gateway, a user or installer can at the time of installation and by means of the configuration software, determine which electric or electronic appliance needs to be activated upon receiving a signal from the digital meter that the available energy level E_{A} is lower than a predetermined threshold E_{TH} for a predetermined time duration T_{SET}. Any suitable electric or electronic appliance can be activated in that way, such as, for example but not limited to, a washing machine, a dryer, a dish washer, .... It has to be noted that the electric or electronic appliances that are activated in that way will mostly be additional to the electric or electronic appliances that run automatically all day or part of the day, such as heating, cooling, lighting and so on. However, also such appliances could, if preferred by a user, be activated in the above described way, although this will not be the standard use of an energy management system according to embodiments of the invention.

Further, also the threshold E_{TH} for the available energy level E_{A} and the predetermined time duration T_{SET} are set in the programming software in the gateway. This can be done during installation of the energy management system or at any other time, whenever required by a user. In practice, the digital meter frequently sends signals or data to the gateway. When, in the gateway, it is monitored that the available energy level E_{A} is lower than a predetermined threshold E_{TH} for a predetermined time duration T_{SET}, the gateway will send a signal to the electric or electronic appliance to activate it.

According to embodiments of the invention, user ports of the digital meter may be connected to the gateway via the P1 user port. This may be done by any suitable cable as known by a person skilled in the art, such as, for example, an RJ12 cable. Hence, the signals sent from the digital meter are sent to the P user port of the gateway.

Hence, in the example of Fig. 1, the threshold E_{TH} is set at -300 Watt and the time duration T_{SET} is set at 15 minutes. This means that, as from the moment that the available energy level E_{A} is at -300 Watt, the time duration is counted. If the available energy level E_{A} is below -300 Watt for at least 15 minutes, the gateway will activate appliance 1.

As from the time that the available energy level E_{A} is less than 15 min below the threshold E_{TH}, the gateway will send a signal to the electric or electronic appliance for being deactivated. However, according to embodiments of the invention, the programming software in the gateway may be adapted to, if necessary, keep the electric or electronic appliance switched on for a predetermined time period before shutting off, so that any program still running can be properly finished.

In the example of Fig. 1, the total time T_{EA} the available energy level E_{A} was below the threshold E_{TH} is about 70 minutes. After the appliance has been switched on , the appliance could run for 70 minutes, unless the program of the appliance was already finished. Signals are kept being sent from the digital meter to the gateway. After every new time frame of 15 minutes it is evaluated whether the past 15 minutes the available energy level E_{A} was the whole time frame below the threshold value E_{TH}. When this is no longer the case, the gateway will deactivate the electric or electronic appliance, if the type of electric or electronic appliances allows to. If not, the gateway will deactivate the appliance after the program on the appliance has finished.

According to further embodiments or the invention but not necessarily, the energy management system may further comprise a smart plug that is plugged into a socket outlet, and in which the electric or electronic appliance is plugged in. Upon monitoring that the available energy level E_{A} is lower than a predetermined threshold E_{TH} for a predetermined time duration T_{SET}, the gateway will send a signal to the smart plug and the smart plug will switch the electric or electronic appliance on. Similarly, when the available energy level E_{A} is no longer below the predetermined threshold E_{TH} for a predetermined time T_{SET}, the smart plug will, upon receiving a signal from the gateway, switch off the electric or electronic appliance.

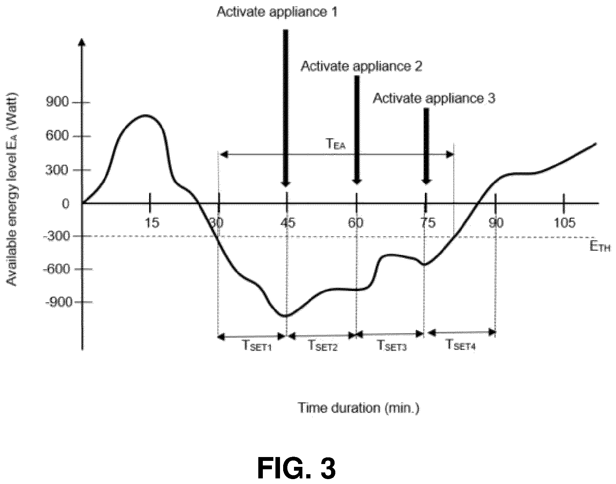

According to embodiments of the invention, more than one electric or electronic appliance can be activated, as long as enough solar energy is generated. This is illustrated in Fig. 3. The generated solar energy and the energy consumption in the building are monitored by the digital meter. The digital meter sends signals or data to the P1 user port of the gateway. The signals are indicative of the available energy level E_{A}. When it is detected by the gateway that the available energy level E_{A} is below the predetermined threshold E_{TH} for a predetermined time T_{SET}, the gateway will send a signal directly to a first electric or electronic appliance or via a smart plug in which the electric or electronic appliance is plugged in, for activating the first electric or electronic appliance. Monitoring of the available energy level E_{A} keeps going on. If after the predetermined time duration T_{SET}, the available energy level E_{A} is still below the predetermined threshold value E_{TH}, a second electric or electronic appliance can be activated by sending a signal from the gateway directly to the second electric or electronic appliance or via a smart plug into which the second electric or electronic appliance is plugged in. This can be repeated for as long as the available energy level E_{A} is below the predetermined threshold value E_{TH} and for as many appliances as are programmed in the programming software in the gateway.

According to embodiments of the invention, the order in which the different electric or electronic appliances need to be activated according to a user preferences can be programmed in the programming software in the gateway. This can be done during installation of the energy management system or can be done at any other time, whenever this is required for a user.

When it is detected that the available energy level E_{A} is no longer below the predetermined threshold value E_{TH} for the predetermined time duration T_{SET}, the gateway will send a signal directly to the electric or electronic appliances or via a smart plug into which the electric or electronic appliance is plugged in, to deactivate or switch off the electric or electronic appliance.

In the above example, the different predetermined time durations T_{SET} for different electric or electronic appliances are all the same. However, according to embodiments of the invention, the different predetermined time durations T_{SET} for the different electric or electronic appliances can also be different from each other. For example, T_{SET} for activating the first appliance can be 15 minutes, while T_{SET} for activating the second appliance can be 20 minutes, T_{SET} for activating the third appliance can be 30 minutes, and so on.

Similarly, also the predetermined threshold value E_{TH} can be different for the different appliances. For example, E_{TH} can be -300 Watt for a first appliances, but can be set at -500 Watt for a second appliances and for any further appliance.

According to further embodiments of the invention, the gateway may further be adapted to link the decision to activate of the first and/or further electric or electronic appliances with external information, such as, for example, weather forecast. For example, if the available energy level E_{A} is below the predetermined threshold E_{TH} for the predetermined time duration T_{SET}, but the weather forecast predicts that within a few moment the sun will no longer shine and it will be raining for the rest of the day, the gateway can decide not to send a signal for activating the electric or electronic appliance. The scope of the invention is defined by the appended claims.

## Claims

1. Method for optimal use of solar energy in a building, the method comprising:
- measuring the amount of local solar energy generation by means of a digital meter,
- monitoring energy consumption in the building by means of the digital meter, **characterized in that** the method furthermore comprises
- determining the difference between the energy consumption and the generated solar energy by subtracting the generated solar energy from the energy consumption which results in the available energy level (E_{A}), and monitoring that difference,
- sending signals from the digital meter to a gateway, the signals being indicative of the available energy level (E_{A}),
- monitoring the available energy level (E_{A}), and
- upon monitoring that the available energy level (E_{A}) is below a predetermined threshold (E_{TH}) for at least a predetermined time duration (T_{SET}), sending a signal from the gateway to a first electric or electronic appliance for activating the first electric or electronic appliance, the predetermined threshold (E_{TH}) and the predetermined time duration (T_{SET}) being programmed in the gateway.

2. Method according to claim 1, wherein sending a signal to the gateway is done by sending a signal from a user port of a digital meter to a P1 user port of the gateway.

3. Method according to claim 1 or 2, wherein the method further comprises:
a) after activating the first electric or electronic appliance, and when the available energy level (EA) is still below the predetermined threshold for at least a further predetermined time duration, sending a signal to a gateway for activating a further electric or electronic appliance, and
b) as long as the available energy level is below the predetermined threshold for a further predetermined time, repeating step a).

4. Method according to any of the previous claims, wherein the method further comprises:
- whenever the available energy level (EA) is no longer below the predetermined threshold, sending a signal to the gateway for turning off at least one of the first or further electric or electronic appliances.

5. Method according to claim 4 or, wherein the method further comprises:
- keeping at least one of the first or further electric or electronic appliance turned on for a predetermined time period before turning off, so that any program still running can be properly finished.

6. Method according to any of the previous claims, wherein activating a first electric or electronic device comprising sending a signal from the gateway to a smart plug into which the electric or electronic appliance is plugged in, after which the plug switches the electric or electronic appliance on.

7. An energy management system for controlling solar energy usage of at least one electric or electronic appliance in a building, the energy management system comprising:
- a gateway for controlling the at least one electric or electronic appliance, and
- a digital meter for measuring local solar energy generation and for monitoring the energy consumption in the building,
**characterized in that** the digital meter is adapted for:
- determining and monitoring the difference between the energy consumption and the generated solar energy determined by subtracting the generated solar energy from the energy consumption which results in the available energy level (E_{A}), and
- sending a signal to the gateway for activating a first electric or electronic appliance when the available energy level (E_{A}) is below a predetermined threshold for at least a predetermined time duration, the predetermined threshold and the predetermined time duration being programmed in the gateway.

8. Energy management system according to claim 7, wherein a user port of the digital meter is connected to the gateway via the P1 user port.

9. Energy management system according to claim 7 or 8, further comprising at least one smart plug for switching the at least one electric or electronic appliance on or off upon receiving a signal from the gateway.

10. Energy management system according to any of claims 7 to 9, wherein the gateway is further adapted for:
a) after activating the first electric or electronic appliance, and when the available energy level (EA) is still below the predetermined threshold for at least a further predetermined time duration, sending a signal to a further electric or electronic appliance for activating the further electric or electronic appliance, and for
b) as long as the available energy level is below the predetermined threshold for a further predetermined time, repeating step a).

11. Energy management system according to any of claims 7 to 10, wherein the gateway is further adapted to, whenever the available energy level (EA) is no longer below the predetermined threshold, send a signal to the gateway for turning off at least one of the first or further electric or electronic appliances.

12. Energy management system according to claim 11, wherein the gateway is further adapted to keep at least one of the first or further electric or electronic appliances turned on for a predetermined time period before turning off, so that any program still running can be properly finished.

## Patentansprüche

1. Verfahren zur optimalen Nutzung von Solarenergie in einem Gebäude, wobei das Verfahren umfasst:
- Messen der Menge der lokalen Solarenergieerzeugung mittels eines digitalen Zählers,
- Überwachen des Energieverbrauchs in dem Gebäude mittels des digitalen Zählers, **dadurch gekennzeichnet, dass** das Verfahren ferner umfasst:
- Bestimmen der Differenz zwischen dem Energieverbrauch und der erzeugten Solarenergie durch Subtrahieren der erzeugten Solarenergie von dem Energieverbrauch, was zu dem verfügbaren Energieniveau (E_{A}) führt, und Überwachen dieser Differenz,
- Senden von Signalen von dem digitalen Messgerät an ein Gateway, wobei die Signale das verfügbare Energieniveau (E_{A}) anzeigen,
- Überwachen des verfügbaren Energieniveaus (E_{A}), und
- nach dem Überwachen, dass das verfügbare Energieniveau (E_{A}) für mindestens eine vorbestimmte Zeitdauer (T_{SET}) unter einem vorbestimmten Schwellenwert (E_{TH}) liegt, Senden eines Signals vom Gateway an ein erstes elektrisches oder elektronisches Gerät zum Aktivieren des ersten elektrischen oder elektronischen Geräts, wobei der vorbestimmte Schwellenwert (E_{TH}) und die vorbestimmte Zeitdauer (T_{SET}) im Gateway programmiert sind.

2. Verfahren nach Anspruch 1, wobei das Senden eines Signals an das Gateway durch Senden eines Signals von einem Benutzeranschluss eines digitalen Zählers an einen P1-Benutzeranschluss des Gateways erfolgt.

3. Verfahren nach Anspruch 1 oder 2, wobei das Verfahren ferner Folgendes umfasst:
a) nach dem Aktivieren des ersten elektrischen oder elektronischen Geräts und wenn das verfügbare Energieniveau (EA) noch mindestens eine weitere vorbestimmte Zeitdauer lang unter dem vorbestimmten Schwellenwert liegt, Senden eines Signals an ein Gateway zum Aktivieren eines weiteren elektrischen oder elektronischen Geräts, und
b) solange das verfügbare Energieniveau für eine weitere vorbestimmte Zeit unter dem vorbestimmten Schwellenwert liegt, Wiederholen von Schritt a).

4. Verfahren nach einem der vorhergehenden Ansprüche, wobei das Verfahren ferner umfasst:
- Senden eines Signals an das Gateway zum Ausschalten mindestens eines der ersten oder weiteren elektrischen oder elektronischen Geräte, immer dann, wenn das verfügbare Energieniveau (EA) nicht mehr unter dem vorbestimmten Schwellenwert liegt.

5. Verfahren nach Anspruch 4 oder, wobei das Verfahren ferner umfasst:
- Eingeschaltet-lassen mindestens eines der ersten oder weiteren elektrischen oder elektronischen Geräte vor dem Ausschalten für einen vorgegebenen Zeitraum, damit jedes noch laufende Programm ordnungsgemäß beendet werden kann.

6. Verfahren nach einem der vorhergehenden Ansprüche, wobei das Aktivieren einer ersten elektrischen oder elektronischen Vorrichtung das Senden eines Signals von dem Gateway an einen intelligenten Stecker umfasst, in den das elektrische oder elektronische Gerät eingesteckt ist, woraufhin der Stecker das elektrische oder elektronische Gerät einschaltet.

7. Energiemanagementsystem zur Steuerung der Nutzung von Solarenergie von mindestens einem elektrischen oder elektronischen Gerät in einem Gebäude, wobei das Energiemanagementsystem Folgendes umfasst:
- ein Gateway zur Steuerung des mindestens einen elektrischen oder elektronischen Geräts und
- einen digitalen Zähler zur Messung der lokalen Solarenergieerzeugung und zur Überwachung des Energieverbrauchs in dem Gebäude,
**dadurch gekennzeichnet, dass** der digitale Zähler für Folgendes ausgelegt ist:
- Bestimmen und Überwachen der Differenz zwischen dem Energieverbrauch und der erzeugten Solarenergie, die durch Subtrahieren der erzeugten Solarenergie von dem Energieverbrauch bestimmt wird, was zu dem verfügbaren Energieniveau (E_{A}) führt, und
- Senden eines Signals an das Gateway, um ein erstes elektrisches oder elektronisches Gerät zu aktivieren, wenn das verfügbare Energieniveau (E_{A}) für mindestens eine vorbestimmte Zeitdauer unter einem vorbestimmten Schwellenwert liegt, wobei der vorbestimmte Schwellenwert und die vorbestimmte Zeitdauer im Gateway programmiert sind.

8. Energiemanagementsystem nach Anspruch 7, wobei ein Benutzeranschluss des digitalen Zählers über den P1-Benutzeranschluss mit dem Gateway verbunden ist.

9. Energiemanagementsystem nach Anspruch 7 oder 8, das ferner mindestens einen intelligenten Stecker zum Ein- oder Ausschalten des mindestens einen elektrischen oder elektronischen Geräts bei Empfang eines Signals vom Gateway umfasst.

10. Energiemanagementsystem nach einem der Ansprüche 7 bis 9, wobei das Gateway ferner für Folgendes ausgelegt ist:
a) nach dem Aktivieren des ersten elektrischen oder elektronischen Geräts und wenn das verfügbare Energieniveau (EA) noch mindestens eine weitere vorbestimmte Zeitdauer lang unter dem vorbestimmten Schwellenwert liegt, Senden eines Signals an ein weiteres elektrisches oder elektronisches Gerät zum Aktivieren des weiteren elektrischen oder elektronischen Geräts, und
b) solange das verfügbare Energieniveau für eine weitere vorbestimmte Zeit unter dem vorbestimmten Schwellenwert liegt, Wiederholen von Schritt a).

11. Energiemanagementsystem nach einem der Ansprüche 7 bis 10, wobei das Gateway ferner für Folgendes ausgelegt ist: Senden eines Signals an das Gateway zum Ausschalten mindestens eines der ersten oder weiteren elektrischen oder elektronischen Geräte, immer dann, wenn das verfügbare Energieniveau (EA) nicht mehr unter dem vorbestimmten Schwellenwert liegt.

12. Energiemanagementsystem nach Anspruch 11, wobei das Gateway ferner dafür ausgelegt ist, mindestens eines der ersten oder weiteren elektrischen oder elektronischen Geräte vor dem Ausschalten für einen vorgegebenen Zeitraum eingeschaltet zu lassen, damit jedes noch laufende Programm ordnungsgemäß beendet werden kann.

## Revendications

1. Procédé pour utilisation optimale d'énergie solaire dans un bâtiment, le procédé comprenant :
- la mesure de la quantité de génération locale d'énergie solaire au moyen d'un compteur numérique,
- la surveillance d'une consommation d'énergie dans le bâtiment au moyen du compteur numérique,
**caractérisé en ce que** le procédé comprend en outre
- la détermination de la différence entre la consommation d'énergie et l'énergie solaire générée, en soustrayant l'énergie solaire générée de la consommation d'énergie, ce qui a pour résultat le niveau d'énergie disponible (E_{A}), et la surveillance de cette différence,
- l'envoi de signaux depuis le compteur numérique à une passerelle, les signaux étant indicatifs du niveau d'énergie disponible (E_{A}),
- la surveillance du niveau d'énergie disponible (E_{A}), et
- à la suite de la surveillance que le niveau d'énergie disponible (E_{A}) est inférieur à un seuil prédéterminé (E_{TH}) pendant au moins une durée prédéterminée (T_{SET}), l'envoi d'un signal depuis la passerelle à un premier appareil électrique ou électronique pour activer le premier appareil électrique ou électronique, le seuil prédéterminé (E_{TH}) et la durée prédéterminée (T_{SET}) étant programmés dans la passerelle.

2. Procédé selon la revendication 1, dans lequel l'envoi d'un signal à la passerelle est effectué par l'envoi d'un signal depuis un port utilisateur d'un compteur numérique à un port utilisateur P1 de la passerelle.

3. Procédé selon la revendication 1 ou 2, dans lequel le procédé comprend en outre :
a) après l'activation du premier appareil électrique ou électronique, et lorsque le niveau d'énergie disponible (EA) est toujours inférieur au seuil prédéterminé pendant au moins une durée prédéterminée supplémentaire, l'envoi d'un signal à une passerelle pour activer un appareil électrique ou électronique supplémentaire, et
b) du moment que le niveau d'énergie disponible est inférieur au seuil prédéterminé pendant un temps prédéterminé supplémentaire, la répétition de l'étape a).

4. Procédé selon de quelconques des revendications précédentes, dans lequel le procédé comprend en outre :
- à chaque fois que le niveau d'énergie disponible (EA) n'est plus inférieur au seuil prédéterminé, l'envoi d'un signal à la passerelle pour éteindre au moins un du premier appareil électrique ou électronique ou de l'appareil électrique ou électronique supplémentaire.

5. Procédé selon la revendication 4 ou, dans lequel le procédé comprend en outre :
- le maintien d'au moins un du premier appareil électrique ou électronique ou de l'appareil électrique ou électronique supplémentaire allumé pendant une période prédéterminée avant de l'éteindre, de telle sorte que tout programme toujours en exécution puisse être fini correctement.

6. Procédé selon de quelconques des revendications précédentes, dans lequel l'activation d'un premier dispositif électrique ou électronique comprend l'envoi d'un signal depuis la passerelle à une fiche intelligente dans laquelle l'appareil électrique ou électronique est enfiché, après quoi la fiche allume l'appareil électrique ou électronique.

7. Système de gestion d'énergie pour contrôler un usage d'énergie solaire d'au moins un appareil électrique ou électronique dans un bâtiment, le système de gestion d'énergie comprenant :
- une passerelle pour la commande de l'au moins un appareil électrique ou électronique, et
- un compteur numérique pour la mesure de la génération locale d'énergie solaire et pour la surveillance de la consommation d'énergie dans le bâtiment, **caractérisé en ce que** le compteur numérique est adapté pour :
- la détermination et la surveillance de la différence entre la consommation d'énergie et l'énergie solaire générée déterminée en soustrayant l'énergie solaire générée de la consommation d'énergie, ce qui a pour résultat le niveau d'énergie disponible (E_{A}), et
- l'envoi d'un signal à la passerelle pour activer un premier appareil électrique ou électronique lorsque le niveau d'énergie disponible (E_{A}) est inférieur à un seuil prédéterminé pendant au moins une durée prédéterminée, le seuil prédéterminé et la durée prédéterminée étant programmés dans la passerelle.

8. Système de gestion d'énergie selon la revendication 7, dans lequel un port utilisateur du compteur numérique est connecté à la passerelle par l'intermédiaire du port utilisateur P1.

9. Système de gestion d'énergie selon la revendication 7 ou 8, comprenant en outre au moins une fiche intelligente pour allumer ou éteindre l'au moins un appareil électrique ou électronique à la suite de la réception d'un signal en provenance de la passerelle.

10. Système de gestion d'énergie selon de quelconques des revendications 7 à 9, dans lequel la passerelle est en outre adaptée pour :
a) après l'activation du premier appareil électrique ou électronique, et lorsque le niveau d'énergie disponible (EA) est toujours inférieur au seuil prédéterminé pendant au moins une durée prédéterminée supplémentaire, l'envoi d'un signal à un appareil électrique ou électronique supplémentaire pour activer l'appareil électrique ou électronique supplémentaire, et pour
b) du moment que le niveau d'énergie disponible est inférieur au seuil prédéterminé pendant un temps prédéterminé supplémentaire, la répétition de l'étape a).

11. Système de gestion d'énergie selon de quelconques des revendications 7 à 10, dans lequel la passerelle est en outre adaptée pour, à chaque fois que le niveau d'énergie disponible (EA) n'est plus inférieur au seuil prédéterminé, envoyer un signal à la passerelle pour éteindre au moins un du premier appareil électrique ou électronique ou de l'appareil électrique ou électronique supplémentaire.

12. Système de gestion d'énergie selon la revendication 11, dans lequel la passerelle est en outre adaptée pour maintenir au moins un du premier appareil électrique ou électronique ou de l'appareil électrique ou électronique supplémentaire allumé pendant une période prédéterminée avant de l'éteindre, de telle sorte que tout programme toujours en exécution puisse être fini correctement.
